# FASCICULE DE BREVET EUROPEEN

(11) **EP 2 247 488 B1**
(45) Date de publication et mention de la délivrance du brevet: **27.06.2012**
(21) Numéro de dépôt: 09710501.9
(22) Date de dépôt: 02.02.2009
(51) Int. Cl.: B62B 3/14, B62B 5/06, G09F 7/18, G09F 3/20, G09F 23/06

(54) **CONSOLE POUR L'EQUIPEMENT D'UN CHARIOT ROULANT, NOTAMMENT DE SUPERMARCHE**
HALTERUNG FÜR DIE AUSSTATTUNG EINES ROLLWAGENS, INSBESONDERE EINES EINKAUFSWAGENS
BRACKET FOR THE EQUIPMENT OF A ROLLING CART, PARTICULARLY A SHOPPING CART

(30) Priorité: 04.02.2008 FR 0850678
(43) Date de publication de la demande: 10.11.2010
(73) Titulaire: Itou, 93100 Montreuil (FR)
(72) Inventeur: TRIDON DE REY, Hubert, F-94170 Le Perreux Sur Marne (FR)
(74) Mandataire: Chaffraix, Jean
(86) Numéro de dépôt international: PCT/FR2009/050147
(87) Numéro de publication internationale: WO 2009/101310

(56) Documents cités:
- EP-A- 1 344 705
- WO-A-2005/052899
- DE-U1- 8 617 105
- FR-A- 2 208 623
- FR-A- 2 902 738
- US-A- 3 912 291

## Description

La présente invention concerne une console qui est apte à équiper un chariot roulant, par exemple de supermarché ou de gare, ou encore d'aérogare, et qui constitue notamment un support d'affichage publicitaire.

Un chariot roulant destiné à la clientèle de magasins en libre service permet à son utilisateur d'y loger différents articles et objets collectés dans le magasin au cours de ses achats.

Un tel chariot roulant comporte un panier supérieur qui est par exemple constitué d'une ossature en fil métallique, le chariot étant monté sur un train roulant inférieur.

Chacune des deux parois latérales verticales opposées du chariot et de son panier se prolonge, à son extrémité arrière supérieure, par un montant (ou brancard) qui s'étend globalement vers le haut et vers l'arrière.

Le chariot comporte ainsi deux montants latéraux entre lesquels s'étend une barre horizontale transversale cylindrique de section circulaire, aussi appelée poignée, qui sert à la manoeuvre du chariot par l'utilisateur situé en arrière du chariot.

La barre de manoeuvre est en général un élément tubulaire fixé entre les deux montants.

Dans le cas d'un chariot en fil métallique, chaque montant est essentiellement constitué par un fil métallique replié en U renversé.

La fixation de la poignée tubulaire sur l'extrémité supérieure conformée en un arceau en U en fil métallique fait appel par exemple à une pièce d'assemblage en matière plastique moulée, en forme de manchon, présentant une gorge ayant un contour en forme de U renversé qui reçoit l'extrémité supérieure du montant correspondant, la zone centrale supérieure d'extrémité arrière de cette pièce d'assemblage portant une protubérance transversale horizontale destinée à être engagée dans l'une des deux extrémités de la barre tubulaire de manoeuvre.

On connaît aussi une autre conception de chariot, par exemple du type de celle décrite et représentée dans le document US-A-5.613.696, dont la structure est réalisée essentiellement à partir d'éléments moulés en matière plastique mais qui présente des caractéristiques communes à celles décrites ci-dessus pour la fixation de la barre horizontale de manoeuvre, à savoir que chaque paroi latérale du chariot comporte un montant supérieur, ou brancard, entre lesquels s'étend la poignée de manoeuvre.

On a proposé de nombreuses solutions pour équiper de tels chariots d'accessoires, et notamment de supports publicitaires qui sont visibles par l'utilisateur au cours de sa manoeuvre du chariot dans le magasin.

De tels exemples sont illustrés notamment par les documents WO-A-96/30247, WO-A-96/11130, WO-A-98105022, WO-A-031057543, WO-A-05/052899, EP-A-1.582.432, US-A-7.036.725, US-A-5.320.443 ou encore FR 2 902 738 qui décrit une console selon le préambule de la revendication 1.

Parmi ces documents, de nombreuses solutions consistent en une console apte à équiper le chariot, la console comportant une platine transversale arrière en forme générale de plaque qui s'étend globalement horizontalement, au voisinage de la barre de manoeuvre, notamment pour constituer un support d'affichage publicitaire, et comportant deux ailes latérales verticales parallèles de support de cette platine arrière et de fixation de la console sur le chariot, dont chacune comporte une ouverture apte à être traversé par la barre de manoeuvre.

Ainsi, une fois montées sur le chariot, les deux ailes de support de la console sont traversées par la barre de manoeuvre.

Dans le document WO-A-9630247, il est proposé une première version selon laquelle les ailes latérales verticales sont fixées sur la poignée de manoeuvre par des moyens de serrage avec des vis. Cette solution a pour inconvénient d'occuper une partie de la poignée de manoeuvre et de faire appel à des moyens de fixation peu fiables dans le temps.

Une autre solution proposée dans ce document consiste à remplacer les moyens existant sur un chariot, faisant appel à une pièce d'assemblage en matière plastique moulée en forme de manchon, pour la fixation de la poignée de manoeuvre, par des pièces spéciales qui se prolongent pour le support et la fixation de la platine.

Cette solution permet de dégager toute la longueur de la poignée de manoeuvre du chariot et d'écarter transversalement les ailes de support de la platine, mais elle a pour inconvénient de nécessiter une modification importante de tous les chariots existants que l'on désirerait équiper de la platine.

Afin de remédier à ces inconvénients, l'invention propose une console apte à équiper un chariot roulant, le chariot étant :
- du type comportant deux montants latéraux parallèles opposés d'orientation longitudinale qui s'étendent globalement vers le haut et vers l'arrière, et entre lesquels s'étend une barre horizontale transversale cylindrique de section circulaire pour la manoeuvre du chariot par un utilisateur situé longitudinalement derrière le chariot ;
- et du type dans lequel l'extrémité supérieure de chaque montant latéral est munie d'une pièce d'assemblage, de forme générale convexe, qui reçoit l'extrémité supérieure du montant correspondant, et qui comporte une protubérance qui s'étend horizontalement et transversalement vers l'intérieur pour coopérer avec une extrémité libre de la barre tubulaire de manoeuvre du chariot,
la console étant du type comportant :
* une platine transversale en forme générale de plaque qui s'étend globalement horizontalement, au voisinage de la barre de manoeuvre, notamment pour constituer un support d'affichage publicitaire ; et
* deux ailes latérales verticales parallèles de support de la platine et de fixation de la console sur le chariot dont chacune comporte une ouverture pour recevoir la barre de manoeuvre, caractérisée en ce que chaque aile latérale comporte :
- un logement qui est de forme complémentaire du contour externe de la pièce associée d'assemblage de la barre de manoeuvre et qui est ouvert transversalement vers l'intérieur ;
- et une plaque de fermeture du logement qui est apte à être fixée sur l'aile latérale pour enfermer la pièce d'assemblage transversalement dans le logement et pour immobiliser l'aile latérale sur la pièce d'assemblage.

Selon d'autres caractéristiques de l'invention :
- le logement est délimité par une paroi latérale plane de fond qui s'étend longitudinalement dans un plan vertical et par une paroi latérale qui épouse une partie complémentaire convexe de la pièce d'assemblage, et la plaque de fermeture est délimitée par une face latérale plane qui s'étend longitudinalement dans un plan vertical et par un bord d'extrémité arrière concave qui épouse une partie complémentaire convexe de la pièce d'assemblage ;
- la paroi latérale comporte un tronçon en arc de cylindre concave sensiblement coaxial à la barre de manoeuvre, et le bord d'extrémité arrière concave comporte un tronçon en arc de cylindre sensiblement coaxial à la barre de manoeuvre ;
- la plaque est délimitée par deux bords latéraux parallèles et opposés qui sont reçus entre deux tronçons parallèles en vis-à-vis de la paroi latérale de manière que la plaque de fermeture soit logée à l'intérieur du logement ;
- selon une première forme de réalisation, la plaque de fermeture est fixée sur l'aile latérale au moyen d'au moins une tige de fixation qui s'étend à travers des trous complémentaires alignés de la plaque de fermeture et de l'aile latérale associée ;
- selon une deuxième forme de réalisation, la paroi latérale comporte un rebord s'étendant parallèlement à la paroi latérale plane de fond dudit logement, ledit rebord délimitant entre lui et la pièce d'assemblage un espace dans lequel la plaque de fermeture est engageable pour fermer ledit logement ;
- de préférence, la plaque de fermeture comporte sur sa face opposée à la face latérale plane, une partie centrale qui se trouve en saillie par rapport aux bords longitudinaux de la plaque, la plaque de fermeture étant engageable dans l'espace entre la pièce d'assemblage et le rebord, lesdits bords longitudinaux se logeant derrière le rebord tandis que la partie centrale de la plaque en saillie se loge dans le plan défini par le rebord ;
- de préférence la plaque de fermeture comporte des moyens de verrouillage de son engagement dans le logement ;
- le logement est ouvert longitudinalement vers l'avant de manière à permettre la mise en place de l'aile latérale sur la pièce d'assemblage par introduction de la pièce d'assemblage dans le logement selon une direction longitudinale et verticale ;
- la plaque est réalisée sous la forme d'une pièce distincte qui est fixée entre les extrémités supérieures libres en vis-à-vis des ailes latérales ;
- la platine, les ailes latérales et les plaques de fermeture sont réalisées par moulage en matière plastique ;
- la console présente une symétrie générale de conception par rapport à un plan longitudinal et vertical médian ;
- la console comporte une béquille apte à être interposée entre la paroi cylindrique convexe de la barre de manoeuvre et une portion centrale en vis-à-vis de la face inférieure de la platine.

D'autres caractéristiques et avantages de l'invention, ainsi que des détails de conception et de réalisation apparaîtront à la lecture de la description détaillée qui va suivre pour la compréhension de laquelle on se reportera aux dessins annexés dans lesquels :
- la figure 1 est une vue latérale en élévation d'un chariot roulant de magasin en libre service selon l'état de la technique ;
- la figure 2 est une vue en perspective de trois-quarts arrière gauche d'un chariot du type de celui illustré à la figure 1 et qui est équipé d'une console selon l'invention dont tous les composants sont illustrés en positon assemblée ;

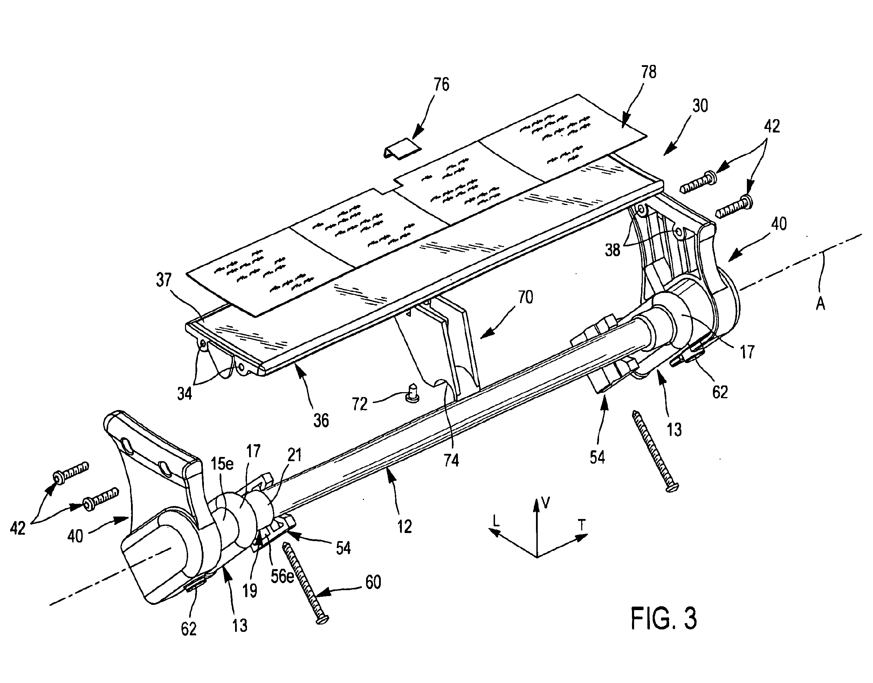

- la figure 3 est une vue en perspective éclatée de trois-quarts arrière gauche des principaux composants du chariot et de la console de la figure 2 ;

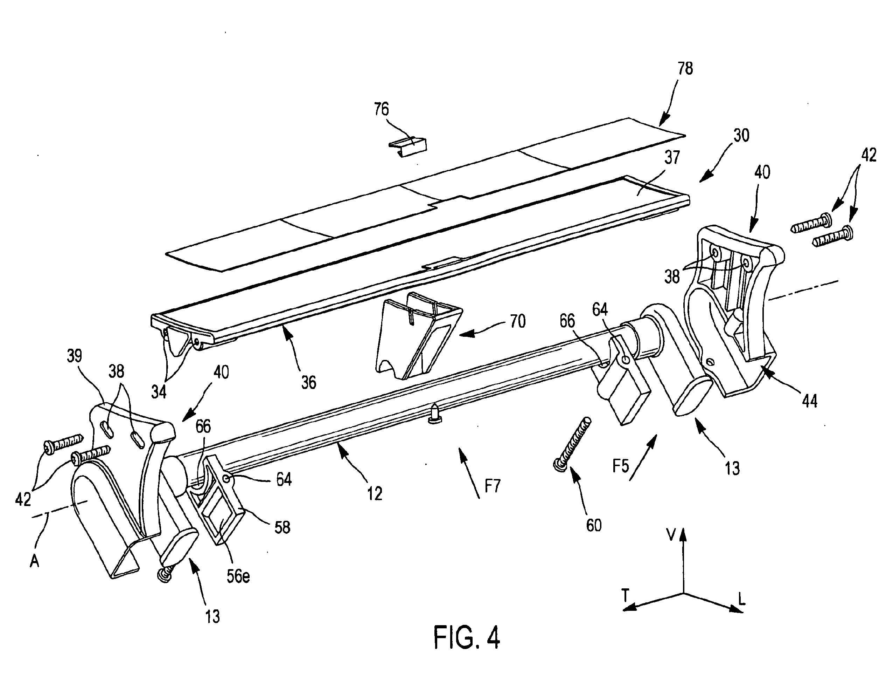

- la figure 4 est une vue en perspective analogue à celle de la figure 3, selon un autre angle de vue
- la figure 5 est une vue de détail à plus grande échelle selon la flèche F5 de la figure 4 ;
- la figure 6 est une vue analogue à celle de la figure 5 illustrant les mêmes composants en position assemblée et fixés entre eux ;

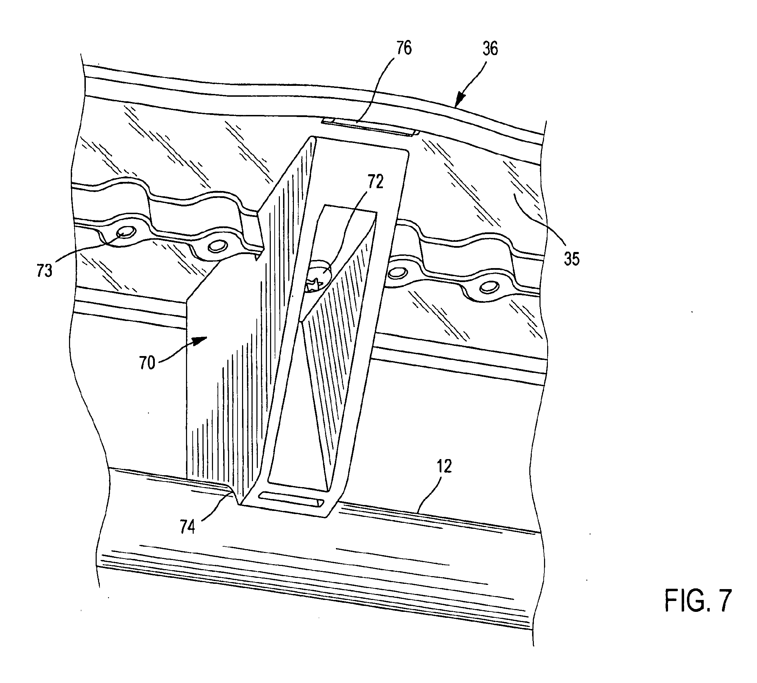

- la figure 7 est une vue de détail à plus grande échelle selon la flèche F7 de la figure 2 qui illustre la béquille en position assemblée ;
- la figure 8 représente une vue en perspective de trois-quarts arrière droite d'une console selon une deuxième forme de réalisation de l'invention dont tous les composants sont illustrés en position assemblée ;
- les figures 8a, 8b et 8c représentent respectivement une vue en perspective avant, une vue en perspective arrière et une vue en perspective latérale de la console selon la figure 8 ;
- les figures 9a, 9b et 9c représentent respectivement une vue en perspective avant, une vue du dessus et une vue en coupe au niveau de la ligne A-A d'une plaque de fermeture de la console représentée à la figure 8 ;

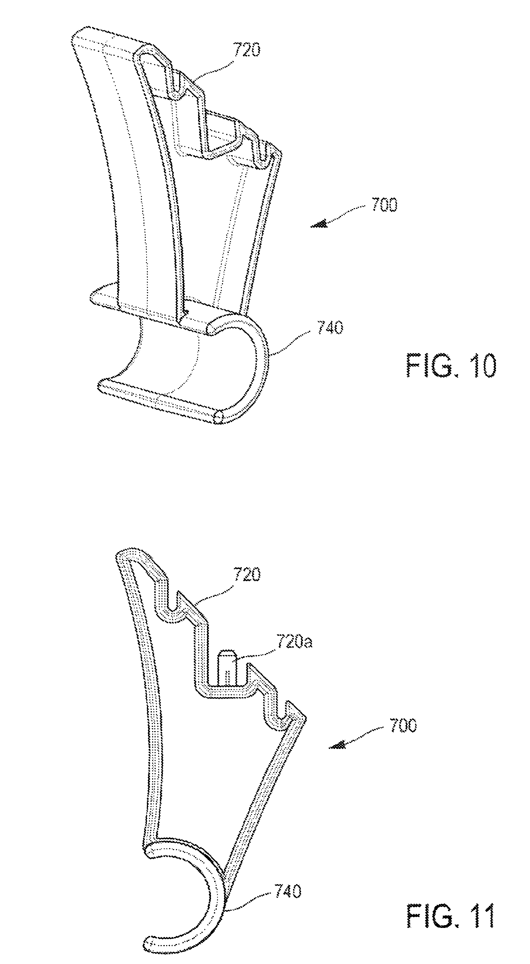

- la figure 10 représente une vue en perspective arrière d'une béquille pour la console de la figure 8 ;
- la figure 11 représente une vue en perspective latérale de la béquille de la figure 10.

Dans la description qui va suivre, des composants ou éléments identiques, similaires ou analogues seront désignés par les mêmes chiffres de référence.

On adoptera la terminologie vertical, horizontal, supérieur, inférieur, en référence à la gravité terrestre et la terminologie longitudinal, vertical et transversal en référence aux trièdre L, V, T indiqué sur les figures, l'axe longitudinal "L" étant par convention orienté d'arrière vers l'avant du chariot.

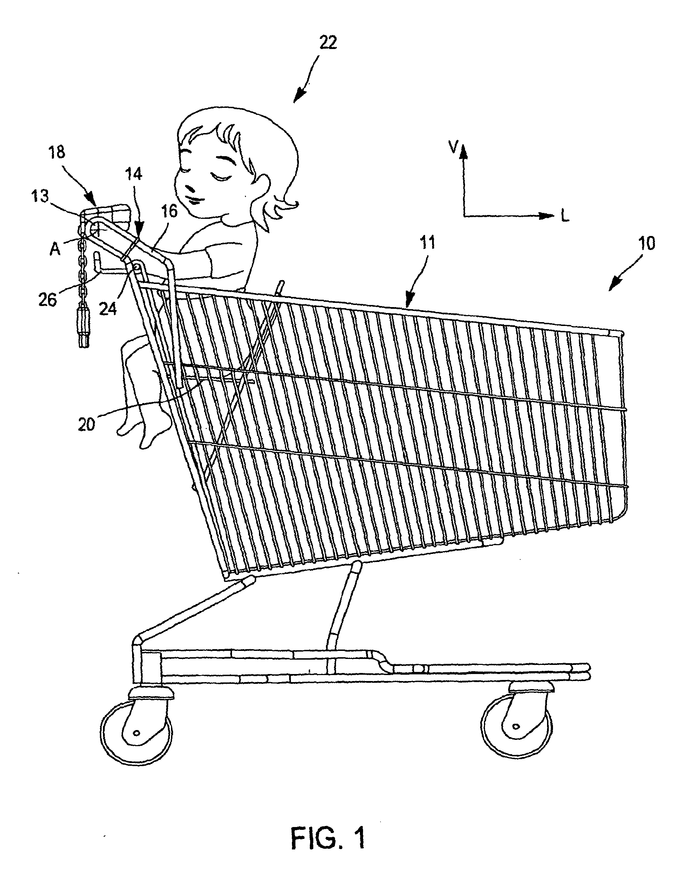

On a représenté à la figure 1, un chariot roulant 10 à structure en fil métallique plié et soudé comportant de manière connue, à sa partie arrière, une barre horizontale de manoeuvre 12 d'axe horizontal A qui est fixée en haut des deux montants ou brancards latéraux opposés 14 dont chacun est ici réalisé par un fil métallique 16 plié en U renversé et s'étend dans un plan vertical.

La fixation de la barre 12 sur les sommets convexes des montants 14 en fil 16 est ici, de manière connue, réalisée au moyen de deux pièces d'assemblage 13 en matière plastique moulée.

De manière connue, la barre horizontale de manoeuvre 12 sert de support à un dispositif dit "monnayeur" 18.

De manière connue la partie arrière du panier 11 est équipée d'un siège repliable 20 destiné à recevoir un enfant 22.

Une tige horizontale fixe supérieure 24 porte aussi, de manière connue, un crochet central 26.

La barre de manoeuvre, ou poignée, 12 permet de faire rouler le chariot 10 longitudinalement d'arrière en avant, c'est-à-dire de la gauche vers la droite en considérant la figure 1 selon l'axe L du trièdre L, V, T.

A l'exception du monnayeur, le chariot 10 présente une symétrie générale de conception selon un plan vertical médian (non représenté) contenant les axes L et V.

L'axe horizontal A de la barre 12 est parallèle à l'axe transversal et horizontal T du trièdre.

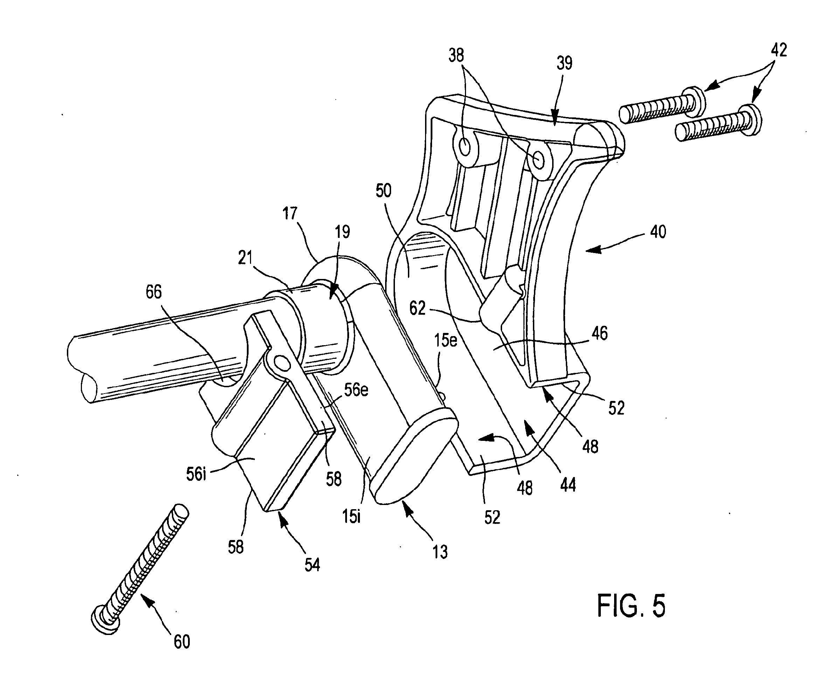

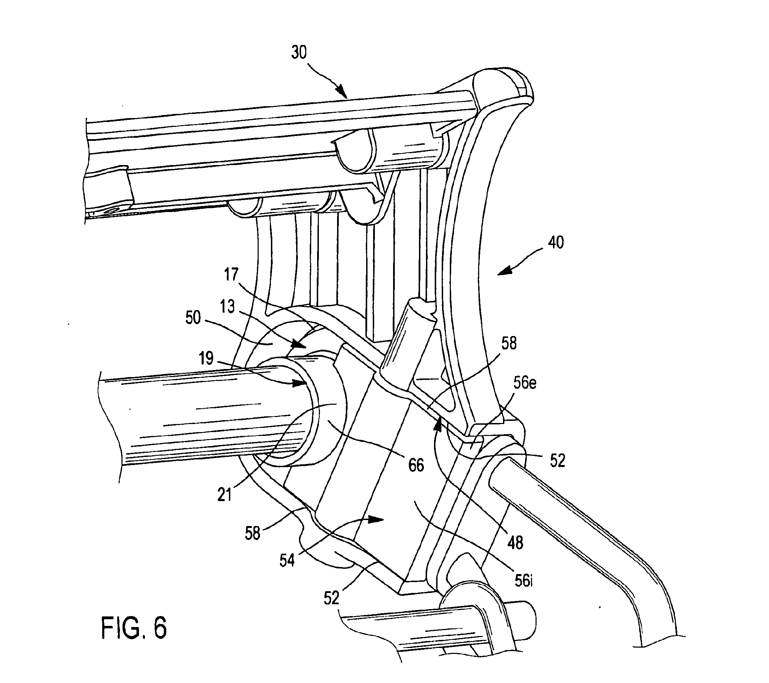

Selon une conception connue, et comme on peut le voir plus en détails notamment aux figures 5 et 6, chaque pièce d'assemblage 13 est une pièce de forme générale convexe, ici moulée en matière plastique, à l'intérieur de laquelle s'étend et est fixé l'extrémité supérieure libre en U 16 du montant 14.

La pièce d'assemblage 13 est en forme générale d'un manchon qui est délimité par deux faces latérales planes et verticales intérieure 15i et extérieure 15e, et par une paroi supérieure en arc de tore convexe 17.

A son extrémité supérieure, depuis sa face latérale intérieure 15i, la pièce d'assemblage 13 comporte au moins un tronçon 19 qui s'étend transversalement vers l'intérieur et qui coopère avec le tronçon d'extrémité libre en vis-à-vis de la barre 12 pour le montage et la fixation de la barre de manoeuvre sur le chariot 10.

Le tronçon 19 est un tronçon de contour externe cylindrique convexe coaxial à l'axe de la barre 12 et délimité par sa surface périphérique 21.

Les moyens de montage et de fixation de la barre 12 de conception connue ne seront pas décrits ici plus en détails.

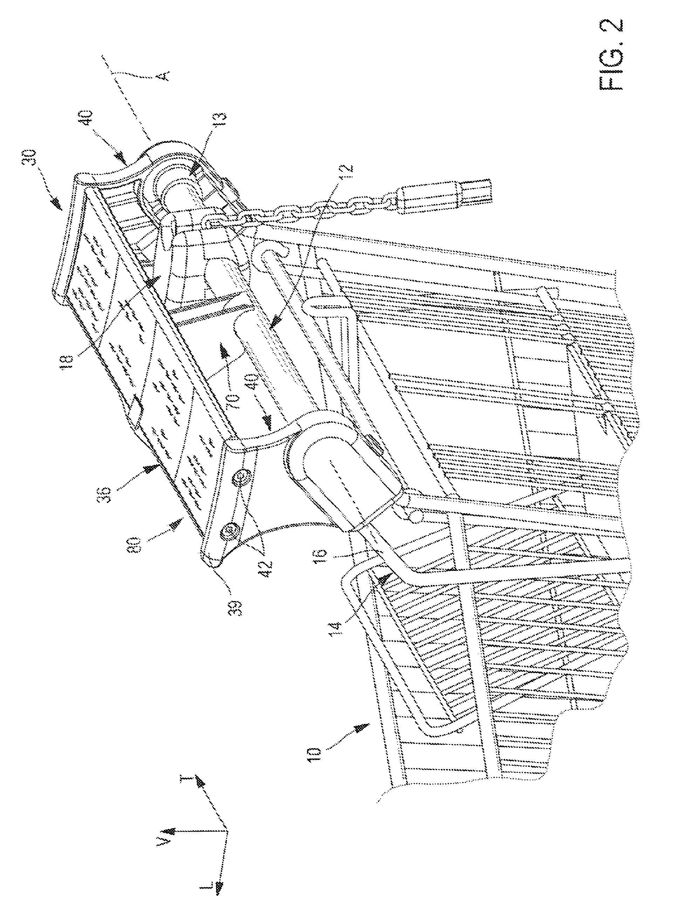

On a représenté aux figures 2 et suivantes, un exemple mode de réalisation d'une console 30 qui est ici constituée pour l'essentiel d'une première pièce supérieure 36 et de deux ailes inférieures 40 qui sont parallèles et dont chacune s'étend dans un plan vertical.

La console 30 présente une symétrie générale de conception par rapport à un plan longitudinal et vertical médian.

Ces trois pièces principales 36 et 40 sont chacune réalisée par moulage en matière plastique et elles sont reliées entre elles, pour constituer la console 30, selon une technique d'assemblage qui sera décrite par la suite.

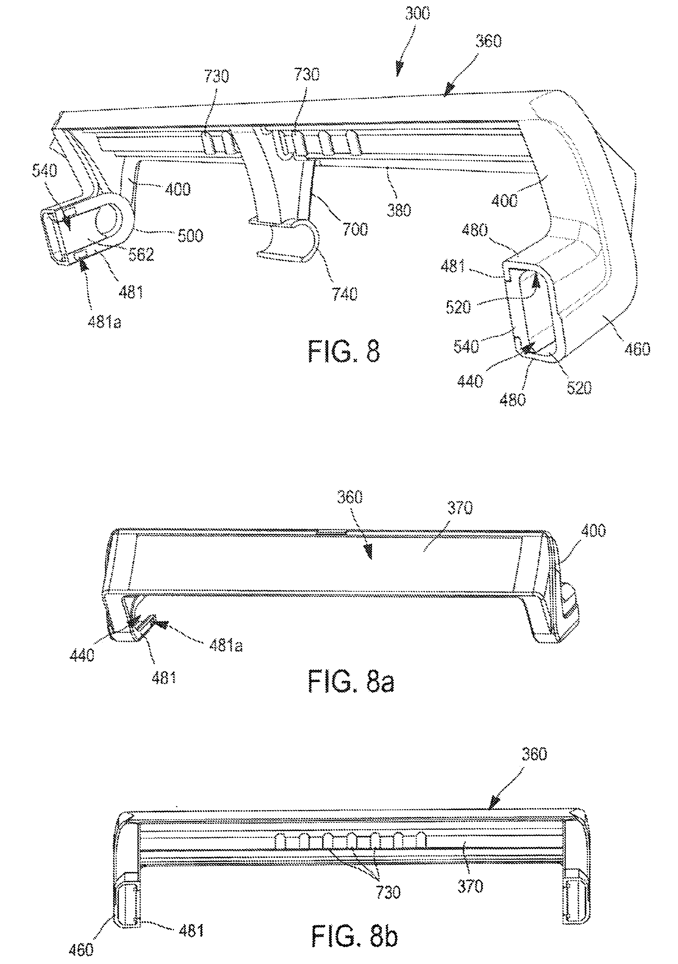

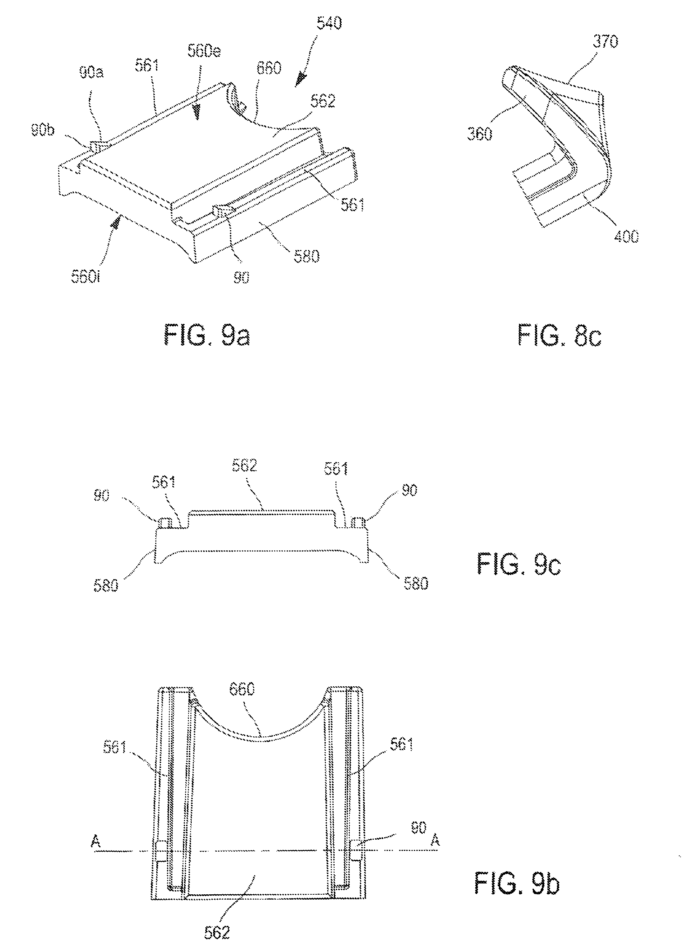

Dans le deuxième exemple de mode de réalisation représenté aux figures 8 et suivantes, la console 300 est également constituée pour l'essentiel d'une partie supérieure 360 et de deux ailes inférieures 400 qui sont parallèles et dont chacune s'étend dans un plan vertical. La console 300 présente une symétrie générale de conception par rapport à un plan longitudinal et vertical médian, cependant les trois parties principales 360 et 400 sont réalisées d'une seule pièce par moulage en matière plastique pour constituer la console 300.

La console 30 comporte ainsi une platine transversale supérieure 36 en forme générale d'une plaque qui s'étend globalement horizontalement avec sa face supérieure libre 37 orientée vers le haut et visible par l'utilisateur, la platine supérieure 36 étant située verticalement au-dessus et sensiblement au droit de la barre 12 et son axe A.

Chaque aile 40 est une aile latérale verticale 40 de la console qui est une aile à la fois de support de la platine supérieure 36 et de fixation de la console 30 sur la barre 12 du chariot 10.

Les deux ailes verticales 40 et la platine supérieure 36 sont ici assemblées entre elles par un ensemble de deux paires de vis 42 qui s'étendent verticalement horizontalement et transversalement vers l'intérieur, les tiges des vis s'étendant à travers des trous 38 formés à cet effet dans les tronçons supérieurs renforcés 39 des ailes latérales 40 et leurs extrémités filetées étant vissées dans des trous complémentaires 34 de la platine 36.

Chaque aile latérale 40 est en forme générale d'une plaque qui s'étend dans un plan vertical et qui, en position assemblée et fixée de la console sur le chariot, s'étend sensiblement dans le même plan que le montant 13 associé.

Conformément à l'invention, les ailes latérales 40 sont conçues pour assurer le montage et la fixation de la console 30 sur le chariot, sans coopérer avec la barre ou poignée de manoeuvre 12 qui conserve sa fonction.

La conception selon l'invention ne nécessite aucune modification du chariot 10 existant pour le montage et la fixation de la console 30.

Chaque aile latérale 40 comporte, à son extrémité globalement inférieure, un logement 44 qui est réalisé venu de matière par moulage.

La forme et le profil du logement 44 sont complémentaires de ceux de la pièce d'assemblage 13.

Le logement 44 est ouvert transversalement vers l'intérieur et verticalement selon la direction longitudinale et vers le bas.

Le logement 44 est délimité transversalement vers l'extérieur par une paroi latérale plane de fond 46 qui s'étend longitudinalement dans un plan vertical et par une paroi latérale 48 qui épouse la partie complémentaire convexe de la pièce d'assemblage 13.

La paroi latérale 48 comporte un tronçon supérieur arrière 50 en arc de cylindre concave sensiblement, coaxial à l'axe A de la barre de manoeuvre 12.

La paroi latérale 48 comporte aussi deux tronçons parallèles plans 52 en vis-à-vis.

La profondeur, selon la direction transversale, du logement 44 est telle que, en position montée, la pièce d'assemblage 13 est entièrement logée dans le logement 44 (voir figure 6) et qu'il est aussi possible d'y loger une plaque 54 de fermeture du logement 44.

La fonction de la plaque 54 est de fermer transversalement le logement 44 pour y emprisonner la pièce d'assemblage.

La plaque de fermeture 54 est délimitée par deux faces principales parallèles et opposées, respectivement intérieure 56i et extérieure 56e, chaque face latérale 56i et 56e étant une face plane qui s'étend longitudinalement dans un plan vertical.

La plaque de fermeture 54 est délimitée par deux bords latéraux parallèles et opposés 58 qui sont aptes à être reçus entre les deux tronçons parallèles plans 52 du logement 44, avec un jeu faible de manière que la plaque de fermeture 54 soit logée à l'intérieur du logement 44 (voir figure 6).

La fixation de la plaque de fermeture sur l'aile latérale 40 est ici assurée par une vis 60, ou par une tige emmanchée à force, dont la tige s'étend à travers des trous ou alésages alignés complémentaires 62 et 64 formés dans l'aile 40 et la plaque de fermeture 54.

Afin d'immobiliser l'aile avec sa plaque de fermeture pratiquement sans jeu, par rapport à la pièce d'assemblage 13, la plaque de fermeture 54 est délimitée longitudinalement vers le haut et vers l'arrière par une partie complémentaire convexe de la pièce d'assemblage.

Plus précisément, la plaque de fermeture 54 est délimitée par un bord d'extrémité arrière concave 66 qui épouse une partie complémentaire convexe de la surface périphérique 21 convexe du tronçon 19 de la pièce d'assemblage 13.

De par cette coopération, et du fait que le tronçon 50 épouse lui aussi pratiquement sans jeu la paroi supérieure en arc de tore convexe 17, l'aile latérale est immobilisée sans jeu par rapport à la pièce d'assemblage 13, et donc par rapport au montant 14.

Si nécessaire, et pour renforcer la platine dans sa portion centrale, on peut prévoir une béquille 70 moulée en matière plastique qui est interposée verticalement entre la face inférieure 35 de la platine 36 et la portion en vis-à-vis de la barre de manoeuvre 12.

La béquille 70 peut être fixée à la platine 36 par une vis 72 pour former un tout avec cette dernière, l'extrémité libre inférieure de la béquille 70 comportant un évidement concave 74 complémentaire du profil de la barre 12.

La béquille 70 peut par exemple être centrée transversalement en laissant ainsi libre la quasi-totalité de la longueur de la barre de manoeuvre 12 pour sa préhension par l'utilisateur du chariot 10, la barre 12 pouvant bien entendu aussi être équipée librement d'un monnayeur.

La béquille peut aussi occuper une série d'autres positions en insérant la vis 72 dans un des trous 73 prévus à cet effet. Il est ainsi possible de placer la béquille en fonction par exemple de la présence et de la position d'un monnayeur sur le chariot à équiper.

La face supérieure 37 de la platine arrière 36 délimite notamment un espace publicitaire 80 apte à recevoir par exemple un dépliant ou une plaquette 78 amovible et fixé au moyen d'une pince élastique 76.

En variante, la platine peut constituer un support pour un écran d'affichage électronique.

Dans le deuxième exemple de mode de réalisation représenté aux figures 8 et suivantes, la console 300 est également constituée pour l'essentiel d'une partie supérieure 360 et de deux ailes inférieures 400 qui sont parallèles et dont chacune s'étend dans un plan vertical. La console 300 présente une symétrie générale de conception par rapport à un plan longitudinal et vertical médian, cependant les trois parties principales 360 et 400 sont réalisées d'une seule pièce par moulage en matière plastique pour constituer la console 300.

La console 300 comporte ainsi une platine transversale supérieure 360 en forme générale d'une plaque qui s'étend globalement horizontalement avec sa face supérieure libre 370 orientée vers le haut et visible par l'utilisateur, la platine supérieure 360 étant située verticalement au-dessus et sensiblement au droit de la barre 12 et son axe A.

Chaque aile 400 est une aile latérale verticale 400 de la console qui est une aile à la fois de support de la platine supérieure 360 et de fixation de la console 300 sur la barre 12 du chariot 10.

Les deux ailes verticales 400 et la platine supérieure 360 sont ici réalisées d'une seule pièce par moulage en matière plastique pour constituer la console 300. Des nervures de renfort 380 sont ménagées sous la face inférieure de la platine 360.

Chaque aile latérale 400 est en forme générale d'une plaque qui s'étend dans un plan vertical et qui, en position assemblée et fixée de la console sur le chariot, s'étend sensiblement dans le même plan que le montant 13 associé.

Conformément à l'invention, les ailes latérales 400 sont conçues pour assurer le montage et la fixation de la console 300 sur le chariot, sans coopérer avec la barre ou poignée de manoeuvre 12 qui conserve sa fonction.

La conception selon cette forme de réalisation de l'invention ne nécessite aucune modification du chariot 10 existant pour le montage et la fixation de la console 300.

Chaque aile latérale 400 comporte, à son extrémité globalement inférieure, un logement 440 qui est réalisé venu de matière par moulage.

La forme et le profil du logement 440 sont complémentaires de ceux de la pièce d'assemblage 13.

Le logement 440 est ouvert transversalement vers l'intérieur et verticalement selon la direction longitudinale et vers le bas.

Le logement 440 est délimité transversalement vers l'extérieur par une paroi latérale plane de fond 460 qui s'étend longitudinalement dans un plan vertical et par une paroi latérale 480 qui épouse la partie complémentaire convexe de la pièce d'assemblage 13.

La paroi latérale 480 comporte un tronçon supérieur arrière 500 en arc de cylindre concave sensiblement, coaxial à l'axe A de la barre de manoeuvre 12.

La paroi latérale 480 comporte aussi deux tronçons parallèles plans 520 en vis-à-vis.

La paroi latérale 480 comporte en outre un rebord 481 s'étendant perpendiculairement à ladite paroi latérale 480 et sensiblement dans un plan parallèle au plan de la paroi de fond 460.

La profondeur, selon la direction transversale, du logement 440 est telle que, en position montée, la pièce d'assemblage 13 est entièrement logée dans le logement 440 et qu'il est ménagé un espace entre le rebord 481 et la pièce d'assemblage dans lequel il est possible de loger une plaque de fermeture 540 du logement 440.

La fonction de la plaque 540 comme précédemment décrit est de fermer transversalement le logement 440 pour y emprisonner la pièce d'assemblage 13.

La plaque de fermeture 540 est délimitée par deux faces principales parallèles et opposées, respectivement intérieure 560i et extérieure 560e, s'étendant sensiblement longitudinalement dans un plan vertical.

La plaque de fermeture 540 est délimitée par deux bords latéraux parallèles et opposés 580 qui sont aptes à être reçus entre les deux tronçons parallèles plans 520 du logement 440, avec un jeu faible de manière que la plaque de fermeture 540 soit logée à l'intérieur du logement 440.

La fixation de la plaque de fermeture 540 sur l'aile latérale 400 est ici assurée par l'engagement de ladite plaque dans l'espace ménagé entre la pièce d'assemblage 13 et le rebord 481 de la paroi latérale avec un jeu faible.

Afin d'immobiliser l'aile 400 avec sa plaque de fermeture 540 pratiquement sans jeu, par rapport à la pièce d'assemblage 13, la plaque de fermeture 540 est délimitée longitudinalement vers le haut et vers l'arrière par une partie complémentaire convexe de la pièce d'assemblage 13.

Plus précisément, la plaque de fermeture 540 est délimitée par un bord d'extrémité arrière concave 660 qui épouse une partie complémentaire convexe de la surface périphérique 21 convexe du tronçon 19 de la pièce d'assemblage 13.

De par cette coopération, et du fait que le tronçon 500 épouse lui aussi pratiquement sans jeu la paroi supérieure en arc de tore convexe 17, l'aile latérale 400 est immobilisée sans jeu par rapport à la pièce d'assemblage 13, et donc par rapport au montant 14.

Selon une forme de réalisation préférée, la face principale extérieure 560e, s'étendant sensiblement longitudinalement dans un plan vertical présente une partie centrale 562 de la face extérieure 560e en saillie par rapport aux bords longitudinaux 561. La plaque de fermeture 540 est alors engageable dans l'espace entre la pièce d'assemblage 13 et le rebord 481; les bords longitudinaux 561 se logeant derrière le rebord 481 tandis que la partie centrale 562 est de forme complémentaire au rebord 481 s'étend dans le même plan vertical que ledit rebord 481.

La face intérieure 560i de la plaque de fermeture 540 peut en outre être ménagée légèrement concave de sorte à s'adapter de manière appropriée sur la pièce d'assemblage 13.

De manière à verrouiller l'engagement de la plaque de fermeture 540 dans le logement 440, on peut prévoir des moyens de verrouillage tels que des ergots 90 ménagés en saillie au niveau des bords longitudinaux 56 de la plaque de fermeture 540 encliquetables dans des lumières 481 a ménagés de manière complémentaire dans le rebord 481.

Ces ergots 90 de forme triangulaire présentent une pente 90a inclinée facilitant l'engagement de la plaque de fermeture 540 dans le logement 440 entre la pièce d'assemblage 13 et le rebord 481. Puis la pente inclinée 90a se poursuit par une paroi verticale 90b destinée à venir en butée contre le bord de la lumière 481a une fois la plaque de fermeture 540 logée dans le logement 440 de sorte que cette butée de l'ergot 90 empêche le déverrouillage de la plaque de fermeture 540.

Pour renforcer la platine 360 dans sa portion centrale, on peut prévoir une béquille 700 moulée en matière plastique qui est interposée verticalement entre la face inférieure 350 de la platine 360 et la portion en vis-à-vis de la barre de manoeuvre 12.

La béquille 700 peut être fixée à la platine 360 par un ergot venu de moulage 720a pour former un tout avec cette dernière, l'extrémité libre inférieure de la béquille 700 comportant une portion tubulaire ouverte 740 complémentaire du profil de la barre 12. Une telle portion tubulaire 740 enserre la barre 12 et permet de maintenir de manière encore plus sûre la console sur le chariot. La partie supérieure 720 de la béquille 700 présente un profil complémentaire de celui de la face inférieure de la platine 360.

La béquille 700 peut par exemple être centrée transversalement en laissant ainsi libre la quasi-totalité de la longueur de la barre de manoeuvre 12 pour sa préhension par l'utilisateur du chariot 10, la barre 12 pouvant bien entendu aussi être équipée librement d'un monnayeur.

La béquille 700 peut aussi occuper une série d'autres positions en insérant l'ergot 720a dans l'un des trous 730 prévus à cet effet. Il est ainsi possible de placer la béquille en fonction par exemple de la présence et de la position d'un monnayeur sur le chariot à équiper.

La face supérieure 370 de la platine arrière 360 délimite notamment un espace publicitaire 80 apte à recevoir par exemple un dépliant ou une plaquette 78 amovible et fixé au moyen d'une pince élastique 76 comme vu précédemment.

## Revendications

1. Console (30) apte à équiper une chariot roulant (10), le chariot étant
- du type comportant deux montants latéraux parallèles opposés (14) d'orientation longitudinale qui s'étendent globalement vers le haut et vers l'arrière, et entre lesquels s'étend une barre (12) horizontale transversale cylindrique de section circulaire pour la manoeuvre du chariot (10) par une utilisateur situé longitudinalement derrière le chariot ;
- et du type dans lequel l'extrémité supérieure de chaque montant latéral est munie d'une pièce d'assemblage (13), de forme générale convexe, qui reçoit l'extrémité supérieure du montant correspondant, et qui comporte une protubérance (19) qui s'étend horizontalement et transversalement vers l'intérieur pour coopérer avec une extrémité libre de la barre tubulaire (12) de manoeuvre du chariot,
la console (30) étant du type comportant :
* une platine transversale (36, 360) en forme général de plaque qui s'étend globalement horizontalement au voisinage de la barre de manoeuvre (12), notamment pour constituer un support d'affichage publicitaire ; et
* deux ailes latérales verticales parallèles (40, 400) de support de la platine (36, 360) et de fixation de la console (30, 300) sur le chariot (10) dont chacune comporte une ouverture pour recevoir la barre de manoeuvre (12), **caractérisée en ce que** chaque aile latérale (40, 400) comporte :
- un logement (44, 440) qui est de forme complémentaire du contour externe de la pièce associée d'assemblage (13) de la barre de manoeuvre (12) et qui est ouvert transversalement vers l'intérieur ;
- et une plaque (54, 540) de fermeture dudit logement (44, 440) qui est apte à être fixée sur l'aile latérale (40, 400) pour enfermer ladite pièce d'assemblage (13) transversalement dans ledit logement (44, 440) et pour immobiliser l'aile latérale (40) sur ladite pièce d'assemblage (13).

2. Console (30) selon la revendication précédente, **caractérisée en ce que** ledit logement (44, 440) est délimité par une paroi latérale plane de fond (46, 460) qui s'étend longitudinalement dans un plan vertical et par une paroi latérale (48, 480) qui épouse une partie complémentaire convexe de ladite pièce d'assemblage (13), et **en ce que** ladite plaque de fermeture (54, 540) est délimitée par une face latérale plane (56e, 560e) qui s'étend longitudinalement dans un plan vertical et par un bord d'extrémité arrière concave (66, 660) qui épouse une partie complémentaire convexe (19, 21) de ladite pièce d'assemblage (13).

3. Console selon la revendication précédente, **caractérisée en ce que** ladite paroi latérale (48, 480) comporte un tronçon en arc de cylindre concave (50, 500) sensiblement coaxial à ladite barre de manoeuvre (12), et **en ce que** ledit bord d'extrémité arrière concave comporte un tronçon en arc de cylindre (66, 660) sensiblement coaxial à ladite barre de manoeuvre (12).

4. Console selon l'une quelconque des revendications 2 ou 3, **caractérisée en ce que** ladite plaque de fermeture (54, 540) est délimitée par deux bords latéraux (58, 580) parallèles et opposés qui sont reçus entre deux tronçons parallèles en vis-à-vis (52, 520) de ladite paroi latérale (48, 480) de manière que la plaque de fermeture (54, 540) soit logée à l'intérieur dudit logement (54, 540).

5. Console selon l'une quelconque des revendications précédentes, **caractérisée en ce que** ladite plaque de fermeture (54) est fixée sur l'aile latérale (40) au moyen d'au moins une tige de fixation (60) qui s'étend à travers des trous complémentaires alignés (62, 64) de la plaque de fermeture (54) et de l'aile latérale associée (40).

6. Console selon l'une quelconque des revendications 2 à 4 **caractérisée en ce que** la paroi latérale (480) comporte un rebord (481) s'étendant parallèlement à la paroi latérale plane de fond (460) dudit logement (440), ledit rebord (481) délimitant entre lui et la pièce d'assemblage (13) un espace dans lequel la plaque de fermeture (540) est engageable pour fermer ledit logement (440).

7. Console selon la revendication précédente, **caractérisée en ce que** la plaque de fermeture (540) comporte sur sa face latérale plane (560e), une partie centrale (562) qui se trouve en saillie par rapport aux bords longitudinaux (561) de ladite face latérale (560e), la plaque de fermeture (540) étant engageable dans l'espace entre la pièce d'assemblage (13) et le rebord (481), lesdits bords longitudinaux (561) se logeant derrière le rebord (481) tandis que la partie centrale (562) de la plaque (540) en saillie se loge dans l'espace défini par le rebord (481) dans le même plan que celui-ci.

8. Console selon l'une des revendications 6 et 7, **caractérisée en ce que** la plaque de fermeture (540) comporte des moyens de verrouillage de son engagement dans le logement (440) tels que des ergots (90) ménagés en saillie au niveau des bords longitudinaux (561) de la plaque de fermeture (540) encliquetables dans des lumières (481a) ménagés de manière complémentaire dans le rebord (481).

9. Console selon l'une quelconque des revendications précédentes, **caractérisée en ce que** ledit logement (44, 440) est ouvert longitudinalement vers l'avant de manière à permettre la mise en place de l'aile latérale (40, 400) sur ladite pièce d'assemblage (13) par introduction de ladite pièce d'assemblage (13) dans le logement (44, 440) selon une direction longitudinale et verticale.

10. Console selon l'une quelconque des revendications précédentes, **caractérisée en ce que** la plaque de fermeture (54, 540) est réalisée sous la forme d'une pièce distincte qui est fixée entre les extrémités supérieures libres en vis-à-vis (39) des ailes latérales (40).

11. Console selon l'une quelconque des revendications précédentes, **caractérisée en ce que** la platine, les ailes latérales (40, 400) et les plaques de fermeture (54, 540) sont réalisées par moulage en matière plastique.

12. Console selon l'une quelconque des revendications précédentes, **caractérisée en ce que** la console (30, 300) présente une symétrie générale de conception par rapport à un plan longitudinal et vertical médian.

13. Console selon l'une quelconque des revendications précédentes, **caractérisée en ce que** les deux ailes verticales (400) et la platine supérieure (360) sont réalisées d'une seule pièce par moulage en matière plastique pour constituer la console 300.

14. Console selon l'une quelconque des revendications précédentes, **caractérisée en ce qu'**elle comporte une béquille (70, 700) apte à être interposée entre la paroi cylindrique convexe de la barre de manoeuvre (12) et une portion centrale en vis-à-vis de la face inférieure (35, 350) de la platine (36, 360).

## Claims

1. Bracket (30) suitable for equipping a rolling cart (10), the rolling cart being
- of the type having two opposite parallel lateral uprights (14), longitudinally oriented, which extend overall upwards and backwards, and between which there extends a cylindrical transverse horizontal bar (12) with a circular cross section for the handling of the rolling cart (10) by a user situated longitudinally behind the rolling cart;
- and of the type in which the top end of each lateral upright is provided with an assembly piece (13), roughly convex in shape, which receives the top end of the corresponding upright, and which comprises a protuberance (19) that extends horizontally and transversely inwards in order to cooperate with a free end of the tubular bar (12) for manoeuvring the rolling cart,
the bracket (30) being of the type comprising:
* a transverse deck (36, 360) in the general form of a plate that extends roughly horizontally, close to the manoeuvring bar (12) in particular to constitute an advertising display carrier; and
* two parallel vertical lateral wings (40, 400) for supporting the deck (36, 360) and fixing the bracket (30, 300) on the rolling cart (10), each of which has an opening for receiving the manoeuvring bar (12), **characterised in that** each lateral wing (40, 400) has:
- a housing (44, 440) that has a shape complementary to the external contour of the associated assembly piece (13) of the manoeuvring bar (12) and is open transversely towards the inside;
- and a plate (54, 540) for closing said housing (44, 440) that is able to be fixed to the lateral wing (40, 400) in order to enclose said assembly piece (13) transversely in said housing (44, 440) and to immobilise the lateral wing (40) on said assembly piece (13).

2. Bracket (30) according to the preceding claim, **characterised in that** said housing (44, 440) is delimited by a flat bottom lateral wall (46, 460) that extends longitudinally in a vertical plane and by a lateral wall (48, 480) that matches a complementary convex part of said assembly piece (13), and **in that** said closure plate (54, 540) is delimited by a flat lateral face (56e, 560e) that extends longitudinally in a vertical plane and by a concave rear end edge (66, 660) that matches a convex complementary part (19, 21) of said assembly piece (13).

3. Bracket according to the preceding claim, **characterised in that** said lateral wall (48, 480) has a portion in an arc of a concave cylinder (50, 500) substantially coaxial with said manoeuvring bar (12), and **in that** said concave rear end edge comprises a portion in an arc of a cylinder (66, 660) substantially coaxial with said manoeuvring bar (12).

4. Bracket according to one of claims 2 or 3, **characterised in that** said closure plate (54, 540) is delimited by two parallel and opposite lateral edges (58, 580) that are received between two facing parallel portions (52, 520) of said lateral wall (48, 480) so that the closure plate (54, 540) is housed inside said housing (54, 540).

5. Bracket according to any of the preceding claims, **characterised in that** said closure plate (54) is fixed to the lateral wing (40) by means of at least one fixing rod (60) that extends through aligned complementary holes (62, 64) in the closure plate (54) and the associated lateral wing (40).

6. Bracket according to any of claims 2 to 4, **characterised in that** the lateral wall (480) comprises a rim (481) extending parallel to the flat bottom lateral wall (460) of said housing (440), said rim (481) delimiting between it and the assembly piece (13) a space in which the closure plate (540) can be engaged to close off said housing (440).

7. Bracket according to the preceding claim, **characterised in that** the closure plate (540) has, on its flat lateral face (560e), a central part (562) that is situated projecting with respect to the longitudinal edges (561) of said lateral face (560e), the closure plate (540) being engageable in the space between the assembly piece (13) and the rim (481), said longitudinal edges (561) being housed behind the rim (481) while the central part (562) of the projecting plate (540) is housed in the space defined by the rim (481) in the same plane as the latter.

8. Bracket according to one of claims 6 and 7, **characterised in that** the closure plate (540) has means of locking its engagement in the housing (440) such as lugs (90) provided projecting at the longitudinal edges (561) of the closure plate (540), which can be snapped into apertures (481a) provided in a complementary fashion in the rim (481).

9. Bracket according any of the preceding claims, **characterised in that** said housing (44, 440) is open longitudinally towards the front so as to enable the lateral wing (40, 400) to be fitted on said assembly piece (13) by the introduction of said assembly piece (13) in the housing (44, 440) in a longitudinal and vertical direction.

10. Bracket according to any of the preceding claims, **characterised in that** the closure plate (54, 540) is produced in the form of a distinct piece that is fixed between the facing free top ends (39) of the lateral wings (40).

11. Bracket according to any of the preceding claims, **characterised in that** the deck, the lateral wings (40, 400) and the closure plates (54, 540) are produced by plastic moulding.

12. Bracket according to any of the preceding claims, **characterised in that** the bracket (30, 300) has a general symmetry of design with respect to a longitudinal and vertical mid-plane.

13. Bracket according to any of the preceding claims, **characterised in that** the two vertical wings (400) and the top plate (360) are produced in a single piece by plastic moulding in order to form the bracket (300).

14. Bracket according to any of the preceding claims, **characterised in that** it comprises a prop (70, 700) able to be interposed between the convex cylindrical wall of the manoeuvring bar (12) and a facing central portion of the bottom face (35, 350) of the deck (36, 360).

## Patentansprüche

1. Halterung (30), dazu ausgelegt, um einen Rollwagen (10) auszustatten, wobei der Wagen wie folgt ist:
- des Typs umfassend zwei gegenüberliegende parallele Seitengestelle (14) mit Längsausrichtung, die sich im Allgemeinen nach oben und nach hinten erstrecken, und zwischen denen sich eine zylindrische horizontale Querstange (12) mit kreisförmigem Schnitt zum Schieben des Wagens (10) durch einen Benutzer erstreckt, der sich längst hinter dem Wagen befindet;
- und des Typs, bei dem das obere Ende jedes Seitengestells mit einem Verbindungsteil (13) mit einer im Allgemeinen konvexen Form ausgestattet ist, der das obere Ende des entsprechenden Gestells aufnimmt, und der einen Vorsprung (19) aufweist, der sich horizontal und quer nach innen erstreckt, um mit einem freien Ende der rohrförmigen Stange (12) zum Schieben des Wagens zusammenzuarbeiten,
wobei die Halterung (30) des Typs ist, umfassend:
- eine Querplatine (36, 360) in der Allgemeinen Form einer Platte, die sich im Wesentlichen horizontal erstreckt, in der Nähe der Stange zum Schieben (12), insbesondere, um einen Reklameanzeigeträger zu bilden; und
- zwei parallele vertikale seitliche Flügel (40, 400) zum Tragen der Platine (36, 360) und zur Befestigung der Halterung (30, 300) auf dem Wagen (10), von denen jeder eine Öffnung aufweist, um die Stange zum Schieben (12) aufzunehmen, **dadurch gekennzeichnet, dass** jeder seitliche Flügel (40, 400) Folgendes umfasst:
-- ein Gehäuse (44, 440), das die komplementäre Form des äußeren Umrisses des assoziierten Verbindungsteils (13) der Stange zum Schieben (12) aufweist, und das quer nach innen offen ist;
-- und eine Deckplatte (54, 540) des besagten Gehäuses (44, 440), die dazu ausgelegt ist, auf dem seitlichen Flügel (40, 400) befestigt zu werden, um den besagten Verbindungsteil (13) quer in dem besagten Gehäuse (44, 440) einzuschließen, und um den seitlichen Flügel (40) auf dem besagten Verbindungsteil (13) zu blockieren.

2. Halterung (30) nach dem vorhergehenden Anspruch, **dadurch gekennzeichnet, dass** das besagte Gehäuse (44, 440) von einer ebenen seitlichen Bodenwand (46, 460) begrenzt ist, die sich längs in einer vertikalen Ebene erstreckt, und von einer seitlichen Wand (48, 480), die sich einem konvexen komplementären Teil des Verbindungsteils (13) anpasst, und dass die besagte Deckplatte (54, 540) von einer ebenen seitlichen Fläche (56e, 560e) begrenzt ist, die sich längs in einer vertikalen Ebene erstreckt, und von eine konkave hintere Endkante (66, 660), die sich einem konvexen komplementären Teil (19, 21) des Verbindungsteils (13) anpasst.

3. Halterung nach dem vorhergehenden Anspruch, **dadurch gekennzeichnet, dass** die besagte seitliche Wand (48, 480) einen Abschnitt in einem konkaven Zylinderbogen (50, 500) umfasst, der im Wesentlichen koaxial mit der Stange zum Schieben (12) ist, und dass die besagte konkave hintere Endkante einen Abschnitt in einem Zylinderbogen (66, 660) umfasst, der im Wesentlichen koaxial mit der Stange zum Schieben (12) ist.

4. Halterung nach einem der Ansprüche 2 oder 3, **dadurch gekennzeichnet, dass** die besagte Deckplatte (54, 540) von zwei parallelen und entgegengesetzten seitlichen Kanten (58, 580) begrenzt ist, die zwischen zwei parallelen und einander gegenüberliegenden Abschnitten (52, 520) der besagten seitlichen Wand (48, 480) aufgenommen sind, so dass die Deckplatte (54, 540) im Inneren des Gehäuses (54, 540) untergebracht ist.

5. Halterung nach einem der vorhergehenden Ansprüche, **dadurch gekennzeichnet, dass** die besagte Deckplatte (54) auf dem seitlichen Flügel (40) mit Hilfe von mindestens einem Befestigungsstift (60) befestigt ist, der sich durch ausgefluchtete komplementäre Löcher (62, 64) der Deckplatte (54) und des assoziierten seitlichen Flügels (40) erstreckt.

6. Halterung nach einem der Ansprüche 2 bis 4, **dadurch gekennzeichnet, dass** die seitliche Wand (480) einen Rand (481) umfasst, der sich parallel zur ebenen seitlichen Bodenwand (460) des besagten Gehäuses (440) erstreckt, wobei der besagte Rand (481) zwischen sich und dem Verbindungsstück (13) einen Raum begrenzt, in den die Deckplatte (540) eingegriffen werden kann, um das besagte Gehäuse (440) zu schließen.

7. Halterung nach dem vorhergehenden Anspruch, **dadurch gekennzeichnet, dass** die Deckplatte (540) auf ihrer ebenen seitlichen Fläche (560e) einen zentralen Teil (562) umfasst, der mit Bezug auf die Längskanten (561) der seitlichen Fläche (560e) vorspringt, wobei die Deckplatte (540) in den Raum zwischen dem Verbindungsstück (13) und dem Rand (481) eingegriffen werden kann, wobei die besagten Längskanten (561) hinter dem Rand (481) untergebracht sind, während der zentrale vorspringende Teil (562) der Platte (540), in dem Raum, definiert durch den Rand (481), in der gleichen Ebene wie dieser untergebracht ist.

8. Halterung nach einem der Ansprüche 6 und 7, **dadurch gekennzeichnet, dass** die Deckplatte (540) Mittel zur Verriegelung ihres Eingriffs in das Gehäuse (440) umfasst, wie z. B. Dorne (90), die vorspringend auf der Ebene der Längskanten (561) der Deckplatte (540) angebracht sind, einschnappbar in Öffnungen (481a), die auf komplementäre Weise im Rand (481) angebracht sind.

9. Halterung nach einem der vorhergehenden Ansprüche, **dadurch gekennzeichnet, dass** das besagte Gehäuse (44, 440) längs nach vorne offen ist, um die Anbringung des seitlichen Flügels (40, 400) auf dem Verbindungsstück (13) durch die Einführung des besagten Verbindungsstücks (13) in das Gehäuse (44, 440) in einer Längs- und Vertikalrichtung zu ermöglichen.

10. Halterung nach einem der vorhergehenden Ansprüche, **dadurch gekennzeichnet, dass** die Deckplatte (54, 540) in der Form eines getrennten Teils durchgeführt ist, der zwischen den freien oberen einander gegenüberliegenden Enden (39) der seitlichen Flügel (40) befestigt ist.

11. Halterung nach einem der vorhergehenden Ansprüche, **dadurch gekennzeichnet, dass** die Platine, die seitlichen Flügel (40, 400) und die Deckplatten (54, 540) durch Formung aus Plastikmaterial hergestellt sind.

12. Halterung nach einem der vorhergehenden Ansprüche, **dadurch gekennzeichnet, dass** die Halterung (30, 300) eine allgemeine Konstruktionssymmetrie mit Bezug auf eine mittlere Längs- und Vertikalebene aufweist.

13. Halterung nach einem der vorhergehenden Ansprüche, **dadurch gekennzeichnet, dass** die zwei vertikalen Flügel (400) und die obere Platine (360) aus einem einzigen Stück durch Formung aus Plastikmaterial hergestellt sind, um die Halterung (300) zu bilden.

14. Halterung nach einem der vorhergehenden Ansprüche, **dadurch gekennzeichnet, dass** sie einen Ständer (70, 700) umfasst, der ausgelegt ist, um zwischen die konvexe zylindrische Wand der Stange zum Schieben (12) und einem zentralen Abschnitt gegenüber der unteren Fläche (35, 350) der Platine (36, 360) angebracht zu werden.
